(19) Europäisches Patentamt
European Patent Office
Office européen des brevets

(11) Veröffentlichungsnummer: **0 307 710 A1**

(12) **EUROPÄISCHE PATENTANMELDUNG**

(21) Anmeldenummer: **88114094.1**

(51) Int. Cl.⁴: **C08G 65/40 , C08G 65/38**

(22) Anmeldetag: **30.08.88**

(30) Priorität: **12.09.87 DE 3730690**

(43) Veröffentlichungstag der Anmeldung: **22.03.89 Patentblatt 89/12**

(84) Benannte Vertragsstaaten: **BE DE FR GB IT**

(71) Anmelder: **BAYER AG**
**Konzernverwaltung RP Patentabteilung**
**D-5090 Leverkusen 1 Bayerwerk(DE)**

(72) Erfinder: **Genz, Joachim, Dr.**
**Bodelschwinghstrasse 16**
**D-4150 Krefeld 1(DE)**
Erfinder: **Dicke, Hans-Rudolf Dr.**
**Kaiserwerther Strasse 48**
**D-4150 Krefeld 12(DE)**
Erfinder: **Eckhardt, Volker Dr.**
**Bodelschwinghstrasse 14**
**D-4150 Krefeld 1(DE)**
Erfinder: **Kleiner, Frank Dr.**
**Am Sonnenhang 62**
**D-5090 Leverkusen 3(DE)**

(54) **Verfahren zur Herstellung von aromatischen Polyetherketonen.**

(57) Verfahren zur Herstellung kristalliner, aromatischer Polyetherketone mit hohem Molekulargewicht, hoher Temperaturbeständigkeit, hoher Beständigkeit gegen die Einwirkung von Chemikalien, sowie guten mechanischen Eigenschaften.

EP 0 307 710 A1

Xerox Copy Centre

## Verfahren zur Herstellung von aromatischen Polyetherketonen

Die Erfindung betrifft ein Verfahren zur Herstellung kristalliner, aromatischer Polyetherketone mit hohem Molekulargewicht, hoher Temperaturbeständigkeit, hoher Beständigkeit gegen die Einwirkung von Chemikalien, sowie guten mechanischen Eigenschaften.

Kristalline, aromatische Polyetherketone sind bekannt. Sie können z.B. durch Umsetzung eines Dialkalimetallsalzes eines Bisphenols, das gegebenenfalls eine Keto-Gruppe enthält, in Gegenwart eines aromatischen Sulfons bei 250° C bis 400° C hergestellt werden (US-PS 4 010 147). Ein weiteres Verfahren beruht auf dem Umsetzung eines Ketogruppen-haltigen Halogenphenols mit einem Alkalimetall-Carbonat in N-Methylpyrrolidon, einem aliphatischen Sulfon oder einem aromatischen Sulfon bei 200° C bis 400° C (z.B. US-PS 4 113 699).

Um hochmolekulare, kristalline aromatische Polyetherketone herzustellen, ist es notwendig, ein Lösemittel zu verwenden, obwohl die hergestellten kristalline Polyetherketone sehr schwer löslich sind.

Bei der Herstellung der Polyetherketone müssen zur Erzielung guter Ausbeuten die Lösungsmittel, in denen die Polymerisation durchgeführt wird, bestimmte Eigenschaften aufweisen.

So wird beispielsweise bei Verwendung eines aliphatischen Sulfons als Lösemittel während der Reaktion eine unerwünschte Gelierung des Ansatzes oder Verfärbung beobachtet, da die Reaktion lange Zeit bei sehr hohen Reaktionstemperaturen gehalten werden muß. Werden beispielsweise Benzophenone als Lösemitel verwendet, so können nur Oligomere erhalten werden (US-PS 4 010 147).

Nur spezielle Benzophenone wie Difluorbenzophenon können für die Polymersynthese eingesetzt werden (EP-OS 1 931 187). Diese sind jedoch teuer und unwirtschaftlich. Chlorierte Verbindungen konnten bislang noch nicht mit befriedigenden Ausbeuten eingesetzt werden.

Es wurde nun gefunden, daß bei Verwendung N-alkylierter Caprolactame als Lösemittel bei der Herstellung von kristallinen, hochmolekularen aromatischen Polyetherketonen auch Chlorketone verwendet werden können.

Gegenstand der Erfindung ist ein Verfahren zur Herstellung eines hochmolekularen, kristallinen aromatischen Polyetherketons aus einer aromatischen Dihydroxy-Verbindung und einer aromatischen Dihalogenverbindung, welche eine Keto-Gruppe enthält, in Gegenwart von Alkalisalzen, dadurch gekennzeichnet, daß als Lösemittel N-$C_1$-$C_5$-Alkylcaprolactame verwendet werden.

Zur Herstellung der Polyetherketone können beispielsweise aromatische Dihydroxy-Verbindungen mit freien Hydroxyl-Gruppen mit einer aromatichen Dihalogen-Ketoverbindung in einem N-alkylierten Caprolactam in Gegenwart einer Alkaliverbindung umgesetzt werden (Reaktionstyp 1) oder Monohydroxymonohalogen-Verbindungen mit einer freien Hydroxylgruppe in einem N-alkylierten Caprolactam in Gegenwart einer Alkaliverbindung umgesetzt werden (Reaktionstyp 2) oder Alkalisalze von aromatischen Dihydroxyverbindungen mit aromatischen Dihalogen-Ketoverbindungen in einem N-alkylierten Caprolactam umgesetzt werden (Reaktionstyp 3) oder Alkalisalze einer Monohydroxymonohalogen-Verbindung in einem N-alkylierten Caprolactam umgesetzt werden (Reaktionstyp 4).

Für das erfindungsgemäße Verfahren können als Dihydroxyverbindungen divalente Phenole der Formel (I)

HO - Ar - OH (I),

in welcher
Ar für $C_6$-$C_{30}$-Arylen steht,
eingesetzt werden.

Geeignete aromatische Dihydroxyverbindungen sind bekannt, z.B. einkernige divalente Phenole wie Hydrochinon mehrkernige Dihydroxyverbindungen wie 4,4′-Dihydroxydiphenyl, Bisphenole wie 2,2-Bis-(4-hydroxyphenyl)propan, Bis-(4-hydroxyphenyl)methan, 4,4′-Dihydroxybenzophenon, 4,4′-Dihydroxydiphenylether, 4,4′-Dihydroxydiphenylsulfid, 1,4-Bis-(4-hydroxybenzoyl)benzol, 1,3-Bis-(4-hydroxybenzoyl)benzol, sowie deren kernsubstituierten Derivate usw. Sie können allein oder als Gemische eingesetzt werden.

Bevorzugt werden 4,4′-Dihydroxydiphenyl, 4,4′-Dihydroxydiphenylether, Hydrochinon und 4,4′-Dihydroxybenzophenon eingesetzt.

Für das erfindungsgemäße Verfahren können aromatische Dihalogen-Ketoverbindungen der Formel (II)

X - Ar - X (II),

in welcher
Ar für $C_6$-$C_{30}$-Arylen steht, welcher mindestens eine Keto-Gruppe enthält und
X für Halogen wie Cl in ortho- oder para-Position an dem jeweils letzten aromatischen Kern steht,
eingesetzt werden.

Bevorzugte Dihalogen-Ketoverbindungen können durch die Formeln (III), (IV) oder (V)

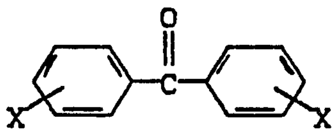

(III),

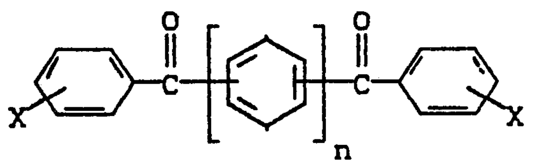

(IV),

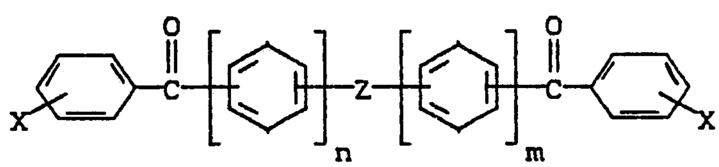

(IV),

in welchen
X die bei Formel (II) angegebene Bedeutung hat,
Z für eine Ethergruppe, eine Thioethergruppe, eine Carbonylgruppe oder eine Sulfongruppe steht, und
m und n für die Zahl 1, 2 oder 3 steht,
beschrieben werden.

Erfindungsgemäß geeignete aromatische Dihalogen-Ketoverbindungen sind Dihalogenchlorverbindungen beispielsweise 4,4′-Dichlorbenzophenon, 2,4′-Dichlorbenzophenon, Bis-1,4-(4-chlorbenzoyl)benzol, Bis-1,3-(4-chlorbenzoyl)benzol, Bis-4,4′-(4-chlorbenzoyl)biphenyl und Bis-4,4′- (4-chlorbenzoyl)diphenylether usw. Die Dihalogen-Ketoverbindungen können allein oder als Gemisch eingesetzt werden.

Die Dihalogen-Ketoverbindungen der Formel (II) haben bevorzugt ein Chloratom in para-Position am jeweilig letzten aromatischen Kern.

Mit Chlor substituierte aromatische Dihalogen-Ketoverbindungen sind gegenüber den sonst verwendeten Difluorverbindungen wesentlich preisgünstiger und trotzdem unter den erfindungsgemäßen Reaktionsbedingungen ausreichend reaktionsfähig.

Besonders bevorzugte aromatische Dihalogen-Ketoverbindungen sind 4,4′-Dichlorbenzophenon und Bis-1,4-(4-chlorbenzoyl)benzol.

Erfindungsgemäß geeignete Monohydroxymonohalogen-Verbindungen können der Formel (VI)

X - Ar - OH (VI),

in welcher
X für Halogen wie Cl steht,
X und OH in ortho- oder para-Position am jeweils letzten aromatischen Rest stehen, und
Ar die bei Formel (II) angegebene Bedeutung hat,
entsprechen.

Anstelle der Verbindungen mit freien Hydroxyl-Gruppen, können ebenso die Alkali-Salze (z.B. Li, Na, K-Salze) der entsprechenden Verbindungen eingesetzt werden.

Bevorzugte Monohydroxymonohalogen-Verbindungen sind beispielsweise, 4-Chlor-4′-hydroxybenzophenon, 4-(4-Chlorbenzoyl)-4′-hydroxybiphenyl, 4-(4-Chlorbenzoyl-4′-hydroxydiphenylether, 4-Chlor-4″-hydroxyterephthalophenon und 4-Chlor-4″-hydroxyisophthalophenon usw., sowie deren Alkalimetall-Salze.

Die Monohydroxymonohalogen-Verbindungen können allein oder als Mischung eingesetzt werden.

Ihre Alkalimetallsalze können nach den üblichen Verfahren erhalten werden, beispielsweise durch

Umsetzung der Hydroxylverbindungen mit Alkalimetallhydroxiden wie LiOH, NaOH, KOH.

Bevorzugte Monohydroxymonohalogen-Verbindung ist 4-Chlor-4′-hydroxybenzophenon bzw. dessen Alkalisalz (z.B. Na-, K-Salz).

Im erfindungsgemäßen Verfahren wird als Lösemittel vorzugweise N-Methylcaprolactam, N-Ethylcaprolactam, N-n-Propylcaprolactam und N-Isopropylcaprolactam eingesetzt, besonders bevorzugt N-Methylcaprolactam.

Der besondere Vorteil der erfindungsgemäß verwendeten Lösemittel liegt darin, daß sie bei Raumtemperatur flüssig sind und einen sehr hohen Siedepunkt besitzen, thermisch stabil und stark polar sind.

Die erfindungsgemäß verwendeten Lösemittel können allein oder als Gemisch eingesetzt werden. Sie können auch als Mischung mit bisher bekannten Lösemitteln wie Diphenylsulfon oder Benzophenon eingesetzt werden.

Erfindungsgemäß geeignete Alkalimetallsalze sind die Alkalimetallsalze der Verbindungen der Formeln (I) und (VI) sowie z.B. Alkali-Hydroxide -Carbonate, -Bicarbonate, -Fluoride, -Hydride, -Alkoxide (z.B. Methylate, Ethylate und -Alkylate (z.B. Butyle, Ethyle), bevorzugt die Carbonate und Bicarbonate des Kaliums. Werden im erfindungsgemäßen Verfahren Monohydroxymonohalogen-Verbindungen der Formel (VI) als Alkalisalze eingesetzt, so kann die Zugabe von Alkalisalzen unterbleiben.

Das erfindungsgemäße Verfahren kann wie folgt durchgeführt werden:

Die Reaktionskomponenten werden in Gegenwart der Alkalimetallverbindung im Lösemittel gelöst und die Reaktionsmischung allmählich auf ca. 120° C bis 200° C aufgeheizt.

Bei dieser Temperatur wird durch ein zugesetztes azeotropes Schleppmittel gebildetes Reaktionswasser entfernt, anschließend das azeotrope Schleppmittel durch Temperaturerhöhung abdestilliert und schließlich wird auf Reaktionstemperaturen von 200° C bis 400° C aufgeheizt und 0,1 bis 24 Stunden, vorzugsweise 0,5 bis 4 Stunden, bei dieser Temperatur gehalten. Für die Erzielung hoher Molekulargewichte werden die aromatischen Dihydroxyverbindungen mit aromatischen Dihalogen-Ketoverbindungen in etwa äquimolaren Mengen miteinander umgesetzt.

Für die wunschgemäße Erreichung gezielt niedrigerer Molekulargewichte kann es zweckmäßig sein, eine der Reaktionskomponenten im Überschuß einzusetzen.

Müssen Alkalisalze zugegeben werden, so werden pro Val. Hydroxylgruppen etwa 1,0 bis 1,2 Mol Alkalisalze zugegeben.

Als azeotropes Schleppmittel können Verbindungen eingesetzt werden, die mit Wasser ein Azeotrop bilden und einen niedrigeren Siedepunkt besitzen als das erfindungsgemäße Lösemittel, beispielsweise Benzol, Toluol und Xylol usw., vorzugsweise Toluol.

Erfindungsgemäß wird die Umsetzung bei einer Temperatur von 180° C bis 400° C, bevorzugt von 200° C bis 280° C, durchgeführt.

Erfindungsgemäß werden kristalline, aromatische Polyetherketone mit hohen Molekulargewichten von 1000 bis 500000 ($M_w$) und mit einer relativen Viskosität von 0,5 (gemessen in Schwefelsäure) erhalten. Diese sind unlöslich in üblichen Lösemitteln und besitzen ausgezeichnete thermische Stabilität, Chemikalienresistenz sowie ausgezeichnete mechanische Eigenschaften. Sie können zur Herstellung von Formkörpern, Filmen, Fasern oder Oberflächenbeschichtungen usw. verwendet werden. Sie können mit anderen Polymeren abgemischt und verarbeitet werden und mit Füllstoffen, wie Glasfasern, Kohlefasern, Aramid-Fasern, Calciumcarbonat, Calciumsilicat und üblichen Zusatzstoffen wie Stabilisatoren, Pigmenten, Entformungsmitteln usw. abgemischt werden.

## Beispiele

### Allgemeine Verfahrensvorschrift

### Reaktionstyp 1:

In einem 3.000 ml Dreihalsrundkolben mit einem Glasrührer und einem Wasserabscheider mit Rückflußkühler und Thermometer werden 1,0 Mol 4,4′-Dichlorbenzophenon, 1,0 Mol der aromatischen Dihydroxyverbindung, 1.200 ml N-Methylcaprolactam, 360 ml Toluol und 1,2 Mol $K_2CO_3$ vorgelegt. Die Reaktionsmischung wird unter Rühren aufgeheizt, bis bei einer Innentemperatur von 200° C das entstehende Reaktionswasser nach 1 bis 5 Stunden vollständig entfernt ist. Nach Entfernen des Reaktionswassers wird auf ca. 230° C aufgeheizt und für ca. 90 Minuten weitergerührt.

Zur Koagulation des entstandenen Polymeren wird die noch heiße Reaktionsmischung in einer 10 %igen wäßrigen Phosphorsäurelösung gefällt, anschließend das pulvrig ausgefallene Polymer abfiltriert und mehrmals in Wasser aufgeschlämmt, bis es elektrolytfrei ist. Zur Entfernung eventuell vorhandener Restlösemittelmengen wird anschließend mit Methanol aufgekocht, abfiltriert und getrocknet. Die Ausbeute beträgt mehr als 93 % der Theorie.

Vom getrockneten Produkt wird in 100 %iger Schwefelsäure in einer Konzentration von 1 g/100 ml die relative Viskosität bestimmt.

Mit Hilfe eines DSC-Meßgerätes der Firma Mettler vom Typ "Mettler TA 3000" wurden der Kristallitschmelzpunkt und die zugehörige Schmelzenthalpie als Funktion des Kristallisationsgrades ermittelt.

Reaktionstyp 2:

In einem 3.000 ml Dreihalsrundkolben, versehen mit Glasrührer, Wasserabscheider mit Rückflußkühler und Thermometer werden 2,0 Mol aromatische Monohydroxymonohalogen-Ketoverbindung, 1.200 ml N-Methylcaprolactam, 360 ml Toluol und 1,2 Mol $K_2CO_3$ vorgelegt. Das Reaktionsverfahren läuft analog zum Reaktionstyp 1 ab.

Reaktionstypen 3 und 4:

Anstelle der Reaktionskomponenten der Reaktionstypen 1 und 2 werden statt der Verbindungen mit freien Hydroxylgruppen die entsprechenden Alkalimetallsalze (Kaliumphenolate) vorgelegt und analog Verfahren wie unter Reaktionstyp 1 beschrieben.

In der Tabelle 1 sind die hergestellten Polymeren zusammengestellt.

Tabelle 1

| Bei-spiel Nr. | Reaktionskomponenten | gebildete Polymerstruktur | rel.Vis-kosität | Schmelz-punkt °C | Schmelz-enthalpie J/g | Farbe des Produktes |
|---|---|---|---|---|---|---|
| 1 | 4,4'-Dichlorbenzophenon Hydrochinon | 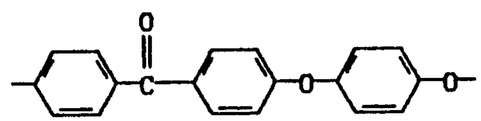 | 0,599 | 338 | 67 | hellbeige |
| 2 | 4,4'-Dichlorbenzophenon 4,4'-Dihydroxydiphenyl | 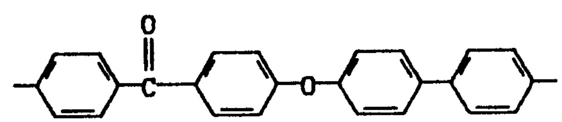 | 0,509 | 391 | 109 | beige |
| 3 | 4,4'-Dichlorbenzophenon 4,4'-Dihydroxydiphenyl-ether | 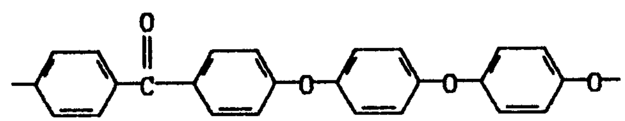 | 0,806 | 324 | 67 | ockergelb |
| 4 | 4,4'-Dichlorbenzophenon 4,4'-Dihydroxybenzophenon | 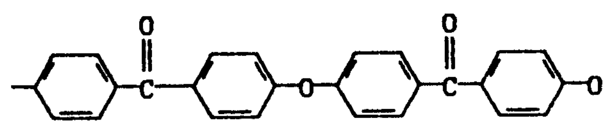 | 0,532 | 375 | 113 | weiß |

Tabelle 1 (Fortsetzung)

| Bei-spiel Nr. | Reaktionskomponenten | gebildete Polymerstruktur | rel.Vis-kosität | Schmelz-punkt °C | Schmelz-enthalpie J/g | Farbe des Produktes |
|---|---|---|---|---|---|---|
| 5 | 4-Chlor-4'-hydroxy-benzophenon | 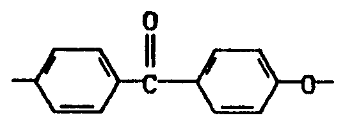 | 0,924 | 365 | 114 | gelb |
| 6 | 4-Chlor-4'-hydroxy-benzophenon-Kalium-Salz | 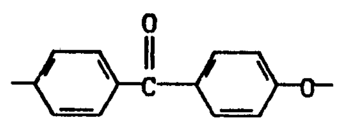 | 1,281 | 366 | 114 | gelb |
| 7 | 4,4'-Dichlorbenzophenon Hydrochinon-Kalium-Salz | 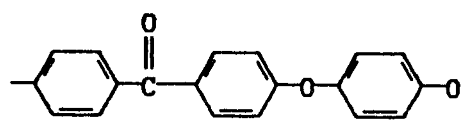 | 0,603 | 340 | 69 | beige |

## Ansprüche

1. Verfahren zur Herstellung eines hochmolekularen, kristallinen aromatischen Polyetherketons aus einer aromatischen Dihydroxy-Verbindung und einer aromatischen Dihalogenverbindung, welche eine Keto-Gruppe enthält in Gegenwart von Alkalisalzen, dadurch gekennzeichnet, daß als Lösemittel N-$C_1$-$C_5$-Alkylcaprolactame verwendet werden.

2. Verfahren nach Anspruch 1, dadurch gekennzeichnet, daß als Dihydroxyverbindungen divalente Phenole der Formel (I)

HO -Ar -OH (I),

in welcher
Ar für $C_6$-$C_{30}$-Arylen steht,
eingesetzt werden.

3. Verfahren nach Anspruch 1, dadurch gekennzeichnet, daß aromatische Dihalogen-Ketoverbindungen der Formel (II)

X - Ar - X (II),

in welcher
Ar für $C_6$-$C_{30}$-Arylen steht, welcher mindestens eine Keto-Gruppe enthält und
X für Cl in ortho- oder para-Position an dem jeweils letzten aromatischen Kern steht,
eingesetzt werden.

4. Verfahren nach Anspruch 1, dadurch gekennzeichnet, daß Monohydroxymonohalogen-Verbindungen der Formel (VI)

X - Ar - OH (VI),

in welcher
X für Halogen wie Cl steht,
X und OH in ortho- oder para-Position am jeweils letzten aromatischen Rest stehen und
Ar die bei Formel (II) angegebene Bedeutung hat oder deren Alkalisalze
eingesetzt werden.

Europäisches Patentamt

# EUROPÄISCHER RECHERCHENBERICHT

Nummer der Anmeldung

EP 88 11 4094

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-B-2 220 079 (INVENTA)<br>* Ansprüche 1,6,8; Spalte 3, Zeile 59 - Spalte 4, Zeile 58 * | 1-3 | C 08 G 65/40<br>C 08 G 65/38 |
| A | DE-B-2 730 128 (IMPERIAL CHEMICAL INDUSTRIES)<br>* Ansprüche 1,2; Spalte 3, Zeilen 25-55; & US - A - 4 113 699 (Kat. D) * | 1-4 | |
| A | EP-A-0 126 369 (BAYER)<br>* Ansprüche 1-3 * | 1 | |
| A | EP-A-0 182 648 (IMPERIAL CHEMICAL INDUSTRIES)<br>* Ansprüche 1-5; Beispiele; Seite 6, Zeilen 20-24 * | 1-4 | |
| | | | **RECHERCHIERTE SACHGEBIETE (Int. Cl.4)** |
| | | | C 08 G 65/00 |

Der vorliegende Recherchenbericht wurde für alle Patentansprüche erstellt

| Recherchenort | Abschlußdatum der Recherche | Prüfer |
|---|---|---|
| BERLIN | 30-11-1988 | BOEKER R.B. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)